(19) Europäisches Patentamt
European Patent Office
Office européen des brevets

(11) **EP 1 811 685 A2**

(12) **EUROPEAN PATENT APPLICATION**

(43) Date of publication:
**25.07.2007 Bulletin 2007/30**

(51) Int Cl.:
***H04B 7/005*** (2006.01)

(21) Application number: **07100673.8**

(22) Date of filing: **17.01.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **19.01.2006 KR 20060005842**

(71) Applicant: **Samsung Electronics Co., Ltd.**
**Suwon-si, Gyeonggi-Do (KR)**

(72) Inventors:
• **Chang, Chung-Ryul**
  **Suwon-si,**
  **Gyeonggi-do (KR)**

• **Yang, Jang-Hoon**
  **Suwon-si,**
  **Gyeonggi-do (KR)**
• **Rha, Seok-Wan**
  **Suwon-si,**
  **Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **System and method for power control based on quality information in a wireless communication system**

(57) A system and method for power control in consideration of uplink channel quality information in a wireless communication system are disclosed. The method includes measuring first channel quality information from a signal received from a base station and transmitting the first channel quality information to the base station; receiving a power control message including a difference between an average channel quality value and a reference channel quality value from the base station, wherein the average channel quality value is obtained by averaging first and second channel quality information measured from a signal received by the base station, and the reference channel quality value is a reference required by the base station; and detecting the difference between the average channel quality value and the reference channel quality value and setting a transmission power for data communication using the difference.

FIG.4

**Description**

**BACKGROUND OF THE INVENTION**

1. Field of the Invention

The present invention relates to a communication system, and more particularly to a system and method for uplink power control in a wireless communication system.

2. Description of the Related Art

For 4th Generation (4G or next generation) communication systems, active research is being undertaken in order to provide users with services having various Qualities of Service (QoS) at a high transmission speed. To this end, in the current 4G communication system, research is being undertaken to develop systems which can support a high speed service capable of guaranteeing mobility and QoS in a Broadband Wireless Access (BWA) communication system such as a wireless Local Area Network (LAN) system and a wireless Metropolitan Area Network (MAN) system.

Therefore, in order to support a broadband transmission network for a physical channel of the wireless MAN system, use of an Orthogonal Frequency Division Multiplexing (OFDM) scheme and an Orthogonal Frequency Division Multiple Access (OFDMA) scheme has been introduced to wireless communication systems. Representatives of such wireless communication systems include an Institute of Electrical and Electronics Engineers (IEEE) 802.16 communication system, which transmits a physical channel signal using multiple sub-carriers, so that it can transmit data at a high speed.

Hereinafter, a wireless communication system using an OFDM scheme and an OFDMA scheme will be described.

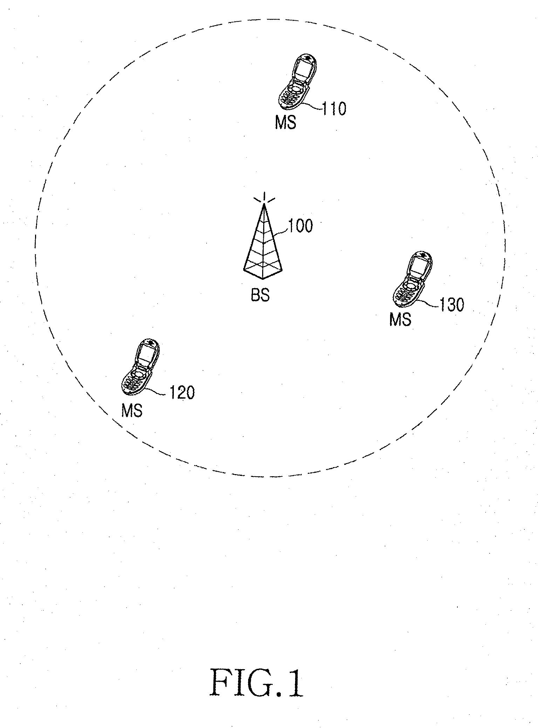

FIG. 1 illustrates a structure of a typical wireless communication system. Referring to FIG. 1, which shows a wireless communication system having a single cell structure, the wireless communication system includes a Base Station (BS) 100 and a plurality of Mobile Stations (MSs) 110, 120, and 130 controlled by the BS 100.

The BS 100 exchanges data with the MSs using the OFDM scheme or the OFDMA scheme. For transmission of the data, a data symbol from the BS 100 is segmented into multiple fragments carried by multiple sub-carriers. To this end, the wireless communication system uses a sub-channel including a predetermined number of sub-carriers, and the BS 100 and the MSs 110, 120, and 130 communicate with each other through the sub-channel.

The wireless communication system performs uplink and downlink power control to increase communication capacity and improve communication quality. That is, when signals transmitted from the MSs 110, 120, and 130 are received by the BS 100 with a Carrier to Interference and Noise Ratio (CINR) at a level requiring a minimum communication quality through control of the transmission power for the MSs 110, 120, and 130, it is possible to maximize the system capacity. If the signals from the MSs 110, 120, and 130 are received with a high intensity, such high intensity may enhance the performance of a corresponding MS but may also increase interference to other MSs using the same channel, thereby degrading general performance of the entire system.

The BS 100 of the wireless communication system is in a wireless channel environment. Therefore, in order to normally restore the data transmitted from the MSs 110, 120, and 130, the BS 100 should consider the path loss in the wireless channel. Therefore, the MSs 110, 120, and 130 transmit data with a power having a sufficient Signal to Noise Ratio (SNR) or CINR for restoration of the signal by the BS 100. At this time, the MSs 110, 120, and 130 do not know the exact path loss and thus should use the path loss value of the downlink. The size of Noise-Interference (NI) used at this time is determined based on the signal that is broadcast from the BS 100.

If an assumption is made that there is data to be transmitted from the MSs 110, 120, and 130 to the BS 100, the BS 100 will then allocate a resource for transmission of data and a Modulation and Coding Scheme (MCS) level to each of the MSs 110, 120, and 130.

At this time, there is a difference between the power of signals received by the BS 100 according to the distances between the BS 100 and each of the MSs 110, 120, and 130, with each MS having fading due to the channel characteristic of the wireless channel. Therefore, the BS 100 and each of the MSs 110, 120, and 130 perform power control for each other. At this time, the power control includes downlink power control and uplink power control.

The downlink power control refers to control of power for the MSs 110, 120, and 130 by the BS 100 so that the CINR of each MS can be maintained constant regardless of change in the location of each of the MSs 110, 120, and 130.

Further, the uplink power control refers to control of the transmission power of each of the MSs 110, 120, and 130 so that signals from all MSs within the BS 100 can be received with the same size by the BS 100.

For example, for the uplink power control described above, the BS 100 controls the MS 110 such that the signal from the MS 110 can satisfy a reference SNR or a reference CINR when it is received. To this end, the BS 100 performs power control based on the uplink channel quality information (for example, SNR or CINR) received from the MS 110.

The MS 110 uses the path loss value of the downlink because it cannot predict or measure the exact path loss value of the downlink, and acquires the size of Noise-Interference (NI) from the signal transmitted from the BS 100. In other words, despite the fact that the BS 100 and the MS 110 are required to measure exact channel quality information (for example, SNR or CINR) for the uplink power control, they perform the power control without reflecting measured channel quality of the uplink as described above.

## SUMMARY OF THE INVENTION

Accordingly, the present invention has been made to solve the above-mentioned problems occurring in conventional systems, and an object of the present invention is to provide a system and method for power control in a wireless communication system.

It is another object of the present invention to provide a system and method for power control in consideration of uplink channel quality information in a wireless communication system.

In order to accomplish this object, there is provided a method for power control by a mobile station in a wireless communication system, the method including measuring first channel quality information from a signal from a base station and transmitting the first channel quality information to the base station; receiving a power control message including a difference between an average channel quality value and a reference channel quality value from the base station, wherein the average channel quality value is obtained by averaging the first channel quality information and second channel quality information measured from a signal received by the base station, and the reference channel quality value is a reference required by the base station; and detecting the difference between the average channel quality value and the reference channel quality value and setting a transmission power for data communication based on the difference.

In accordance with another aspect of the present invention, there is provided a method for power control by a base station in a wireless communication system, the method including receiving first channel quality information measured by a mobile station; measuring second channel quality information from a signal received from the mobile station; calculating an average channel quality value of the first channel quality information and second channel quality information; and measuring a difference between the average channel quality value and a reference channel quality value of a received signal, generating a power control message including the difference, and transmitting the power control message to the mobile station.

In accordance with another aspect of the present invention, there is provided an apparatus for power control in a wireless communication system, the apparatus includes a mobile station for measuring first channel quality information from a signal from a base station and transmitting the first channel quality information to the base station, receiving a power control message including a difference between an average channel quality value and a reference channel quality value from the base station, wherein the average channel quality value is obtained by averaging the first channel quality information and second channel quality information measured from a signal received by the base station, and the reference channel quality value is a reference required by the base station, and detecting the difference between the average channel quality value and the reference channel quality value and setting a transmission power for data communication based on the difference.

In accordance with another aspect of the present invention, there is provided an apparatus for power control in a wireless communication system, the apparatus includes a base station for receiving first channel quality information measured by a mobile station, measuring second channel quality information from a signal received from the mobile station, calculating an average channel quality value of the first channel quality information and second channel quality information, and measuring a difference between the average channel quality value and a reference channel quality value of a received signal, generating a power control message including the difference, and transmitting the power control message to the mobile station.

## BRIEF DESCRIPTION OF THE DRAWINGS

The above and other objects, features and advantages of the present invention will be more apparent from the following detailed description taken in conjunction with the accompanying drawings, in which:

FIG. 1 illustrates a structure of a typical wireless communication system;
FIG. 2 is a graph illustrating the structure of a CQICH of a wireless communication system according to the present invention;
FIGs. 3A and 3B are graphs illustrating tile structures of a PUSC scheme and a O-PUSC used in the CQICH of FIG. 2, respectively;
FIG. 4 is a schematic block diagram of a power control apparatus of a wireless communication system according to the present invention;

FIG. 5 is a schematic block diagram illustrating a CINR measurer of a power control apparatus according to the present invention; and

FIG. 6 is a flowchart of a method for power control in a wireless communication system according to the present invention.

## DETAILED DESCRIPTION OF THE PREFERRED EMBODIMENTS

Hereinafter, preferred embodiments of the present invention will be described with reference to the accompanying drawings. In the following description, a detailed description of known functions and configurations incorporated herein will be omitted when it may make the subject matter of the present invention rather unclear.

The present invention is directed to uplink power control in a wireless communication system, in which first channel quality information of downlink is received and second channel quality information of uplink is measured through a Channel Quality Indicator Channel (CQICH). Further, an average of the first channel quality information and the second channel quality information is obtained and a difference between the average and a reference channel quality required by the BS is calculated. Then, the difference is transmitted to a corresponding MS, so that the MS can perform power control by reflecting the difference in the transmission power when the MS transmits data in the uplink.

The Channel Quality Information (CQI) may be, for example, a Signal to Noise Ratio (SNR) or a Carrier to Interference and Noise Ratio (CINR), and a channel for feedback of the CQI is defined as a CQICH. The following description provides a wireless communication system using an Orthogonal Frequency Division Multiplexing (OFDM) scheme or an Orthogonal Frequency Division Multiple Access (OFDMA) scheme as an example.

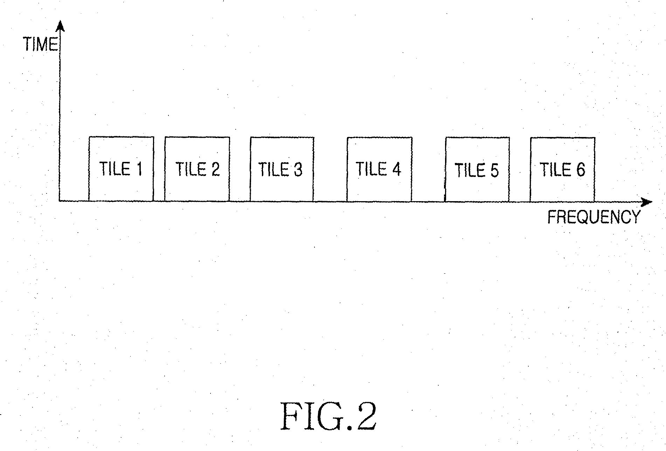

FIG. 2 is a graph illustrating the structure of a CQICH of a wireless communication system according to the present invention. In the wireless communication system shown in FIG. 2, one CQICH includes a predetermined number of tiles, for example, six tiles. Each of the tiles includes a predetermined number of adjacent data sub-carriers during a predetermined OFDM symbol period. In other words, the CQICH shown in FIG. 2 includes six tiles arranged along the frequency axis and the time axis. At this time, the wireless communication system using the CQICH may use a Partial Usage of Sub-Channels (PUSC) scheme or an Optional Partial Usage of Sub-Channels (O-PUSC) scheme. Hereinafter, the structure of a tile for each sub-channel will be discussed.

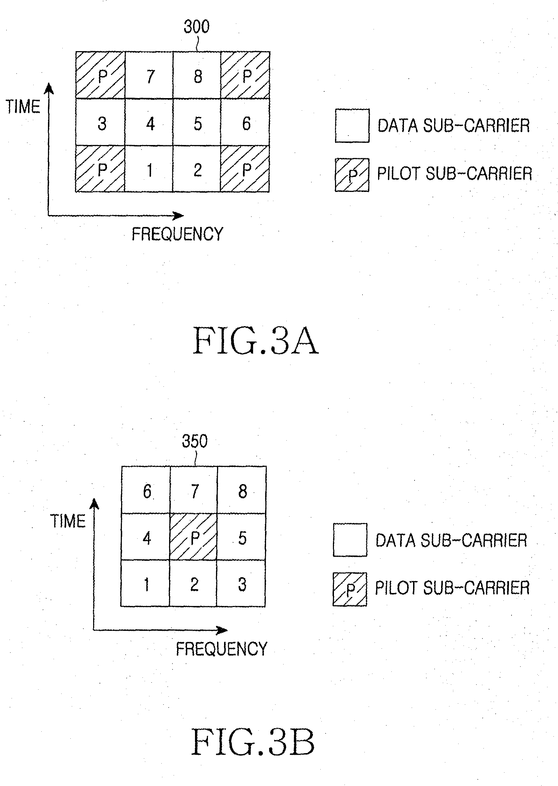

FIGs. 3A and 3B are graphs illustrating tile structures of a PUSC scheme and a O-PUSC used in the CQICH of FIG. 2, respectively. FIG. 3A illustrates the structure of the PUSC scheme of a tile 300, and FIG. 3B illustrates the structure of the O-PUSC scheme of a tile 350. In FIGs. 3A and 3B, each of tiles 300 and 350 includes a total of eight data sub-carriers including data sub-carrier No. 1 to data sub-carrier No. 8 during three OFDM symbol periods along the time axis. The tile 300 using the PUSC scheme of FIG. 3A includes four pilot sub-carriers, and the tile 350 using the O-PUSC scheme of FIG. 3B includes one pilot sub-carrier. However, each of tile 300 using the PUSC scheme and tile 350 using the O-PUSC scheme includes a total of eight data sub-carriers.

The locations of the data sub-carriers and the pilot sub-carriers are shown in FIGs. 3A and 3B. That is, when using the PUSC scheme, one tile includes twelve sub-carriers, and one PUSC sub-channel includes 72 sub-carriers. The 72 sub-carriers include 48 data sub-carriers and 24 pilot sub-carriers. Further, when using the O-PUSC scheme, one tile includes nine sub-carriers, and one PUSC sub-channel includes 54 sub-carriers. The 54 sub-carriers include 48 data sub-carriers and 6 pilot sub-carriers.

In the wireless communication system, the MS transmits its own CQI to the BS through the CQICH. At this time, the BS transmits a CQICH allocation message including a CQICH index to the MS, the MS having received the CQICH index transmits the CQI to the BS through the CQICH.

The MS generates its own CQI with predetermined bits (for example, four bits or six bits), and feedbacks the generated CQI to the BS. At this time, the MS modulates the CQI, maps each code value corresponding to the CQI to a sub-carrier according to a predetermined mapping sequence, and then transmits the mapped sub-carrier to the BS.

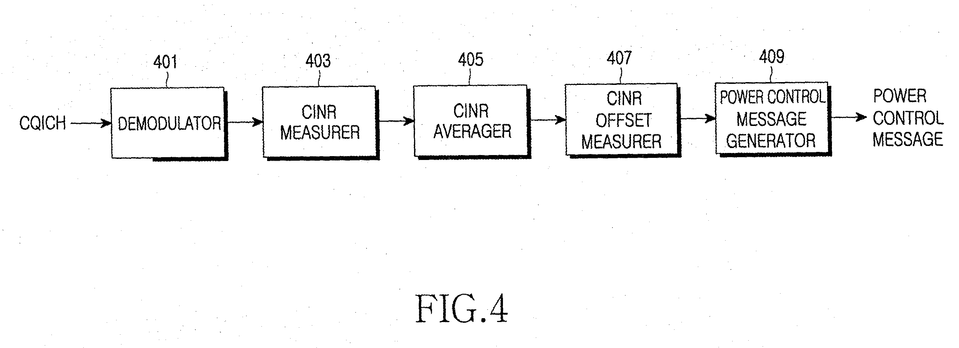

Hereinafter, an example of the sequence in which the MS maps the CQI information to the sub-carrier will be described. First, the first data sub-carrier is filled in the first symbol of a tile having the lowest priority. After allocation of one tile is finished, another data sub-carrier is allocated to a tile having the next priority. At this time, pilot sub-carriers of a predetermined sequence are used. Hereinafter, a structure of a BS having received the CQI through the CQICH will be described with reference to FIG. 4.

FIG. 4 is a schematic block diagram of a power control apparatus of a wireless communication system according to the present invention. Referring to FIG. 4, the BS, which receives CQI from the MS through the CQICH, includes a demodulator 401, a CINR measurer 403, a CINR averager 405, a CINR offset measurer 407, and a power control message generator 409. The following description employs the CINR as the CQI.

The demodulator 401 obtains a first CINR by demodulating the signal received through the CQICH from the MS, and outputs the demodulated signal to the CINR measurer 403. The first CINR is a CINR measured by the MS for the downlink from the BS.

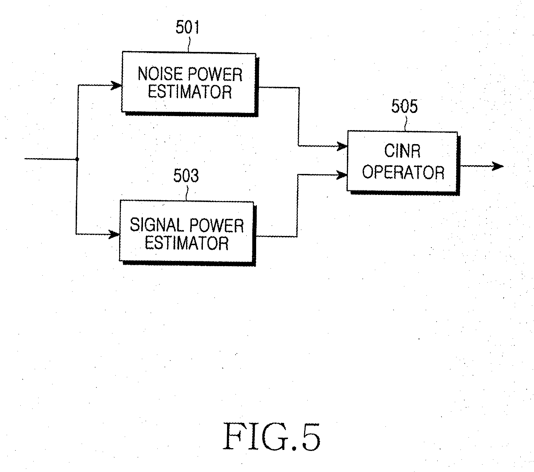

The CINR measurer 403 measures the second CINR for each MS using the output signal of the demodulator 401, and outputs the measured CINR to the CINR averager 405. The CINR measurer 403 is described below in further detail making reference to FIG. 5.

The second CINR measured by the CINR measurer 403 is a CINR measured for the uplink. Thereafter, the second CINR measured by the CINR measurer 403 together with the first CINR demodulated and auquired by the demodulator 401 is input to the CINR averager 405.

The CINR averager 405 calculates an average CINR corresponding to each MS from the first and second CINRs, and outputs the calculated average CINR to the CINR offset measurer 407. The average CINR (that is, $CINR_i$) is defined by Equation (1) below.

$$CINR_i = (1-\alpha)CINR_{i-1} + \alpha CINR_{inst} \quad \dots\dots\dots\dots \quad (1)$$

In Equation (1), $\alpha$ denotes a predetermined constant for obtaining $CINR_i$, which is a factor changeable without restriction according to the system condition or user setup, etc. Further, i of the $CINR_i$ denotes a time index, so that the $CINR_i$ corresponds to a CINR of the i$^{th}$ frame and the $CINR_{i-1}$ corresponds to a CINR of a frame just before the i$^{th}$ frame.

The $CINR_{inst}$ denotes the second CINR. Then, the CINR offset measurer 407 calculates an average CINR for each MS using the first CINR and the second CINR.

When data exists to be transmitted through the uplink by the MS, the CINR offset measurer 407 measures a CINR offset using a reference CINR and the average CINR, and then outputs the measured CINR offset to the power control message generator 409.

When data exists to be transmitted to the BS through the uplink, the MS transmits $UL\_BURST_{CID}\_Flag$ set as "1" to the BS. Upon receiving the $UL\_BURST_{CID}\_Flag$ set as 1, the BS measures the CINR offset (that is, $CINR_{offset}$), which is defined by Equation (2) below.

$$CINR_{offset} = CINR_{t\,arg\,et} - CINR_i \quad \dots\dots\dots\dots \quad (2)$$

In Equation (2), the $CINR_{offset}$ corresponds to a difference between the reference CINR and the average CINR. Further, $CINR_{target}$ denotes the reference CINR required by the BS in order to receive signals from the MSs, and $CINR_i$ denotes the average CINR. Therefore, the value $CINR_{offset}$ reflects not only the reference CINR but also all of the CINRs of the uplink and downlink, change in the noise-interference change of the uplink and the downlink, and path loss of the uplink and the downlink.

Thereafter, the power control message generator 409 generates a power control message including the $CINR_{offset}$, and transmits the generated power control message to the MS. After receiving the power control message, the MS extracts the $CINR_{offset}$ from the power control message. Then, the MS performs the power control by reflecting the extracted $CINR_{offset}$ in the transmission power for data transmission to the BS.

Each of the CINR measurer 403, the CINR averager 405, and the CINR offset measurer 407 has a name including the CINR because the CINR is used as the CQI. However, the names of the CINR measurer 403, the CINR averager 405, and the CINR offset measurer 407 may be replaced by a CQI measurer, a CQI averager, and a CQI estimator.

Further, the operation of the BS can be divided into operation in a physical layer and operation in a Medium Access Control (MAC) layer. Therefore, it can be said that the demodulator 401 and the CINR measurer 403 operate in the physical layer; while the CINR averager 405, the CINR offset measurer 407, and the power control message generator 409 operate in the MAC layer.

Hereinafter, the CINR measurer 403 will be described in more detail with reference to FIG. 5. FIG. 5 is a schematic block diagram illustrating a CINR measurer of a power control apparatus according to the present invention. The CINR measurer includes a noise power estimator 501, a signal power estimator 503, and a CINR operator 505.

The signal power estimator 503 receives a signal demodulated by the demodulator 401. The demodulated signal $Y_{t,s,k}$ is defined by Equation (3) below.

$$Y_{t,s,k} = H_{t,s,k} \cdot X_{t,s,k} + N_{t,s,k} \quad \dots\dots\dots\dots \quad (3)$$

Equation (3) defines a signal received through a CQICH using the PUSC scheme as described above. In Equation (3), for example, the subscript t denotes a tile index, which has a value of 0, 1, 2, 3, 4, or 5, the subscript s

denotes a symbol index, which has a value of 0, 1, or 2, and the subscript k denotes a sub-carrier index, which has a value of 0, 1, 2, or 3.

Further, $H_{t,s,k}$ denotes a channel response of the $k^{th}$ sub-carrier of the $s^{th}$ symbol of the $t^{th}$ tile, $X_{t,s,k}$ denotes a transmission signal of the $k^{th}$ sub-carrier of the $s^{th}$ symbol of the $t^{th}$ tile, and $N_{t,s,k}$ denotes a noise signal of the $k^{th}$ sub-carrier of the $s^{th}$ symbol of the $t^{th}$ tile.

That is, the CQICH of each MS includes six tiles, each of which includes three symbols along the time axis and four sub-carriers along the frequency axis according to the PUSC scheme.

The noise power estimator 501 estimates noise by offsetting adjacent pilot sub-carriers along the frequency axis within one tile, and the estimated noise power N is input to the CINR operator 505. The estimated noise power can be defined by Equation (4) below.

$$N = \frac{1}{24} \sum_{t=0}^{5} \left| (Y_{t,0,0} - Y_{t,0,3}) + (Y_{t,2,0} - Y_{t,2,3}) \right|^2 \quad \ldots\ldots\ldots\ldots \quad (4)$$

Further, the signal power estimator 503 estimates an average power of the received signal using the demodulated signal and inputs the estimated signal power S to the CINR operator 505. The estimated average signal power can be defined by Equation (5) below.

$$S = \frac{1}{72} \sum_{t=0}^{5} \sum_{s=0}^{2} \sum_{k=0}^{3} \left| Y_{t,s,k} \right|^2 \quad \ldots\ldots\ldots\ldots \quad (5)$$

Thereafter, the CINR operator 505 calculates the second CINR using the estimated value, by Equation (6) defined below.

$$CINR_{inst} = 10 \log_{10} \left( \frac{S - N}{N} \right) \quad \ldots\ldots\ldots\ldots \quad (6)$$

This CINR corresponds to information reflecting the signal received through the CQICH, that is, the channel quality of the uplink. Then, the $CINR_{inst}$ calculated by the CINR measurer 403 is input to the CINR averager 405.

In performing the power control, the BS takes into consideration the CINR of the uplink and the downlink, that is, the CQI. To this end, the BS transmits the $CINR_{inst}$ to the MS, thereby achieving more exact and effective power control.

When data exists to be transmitted from the MS to the BS through the uplink, a scheduler of the BS allocates a resource for transmission of the data and a Modulation and Coding Scheme (MCS) level.

Further, in performing power control between the BS and the MS, a closed loop power control corresponds to a method in which the MS controls the power under the command of the BS and the BS receives signals from each of related MSs. Further, the BS compares the received signals with a predetermined reference value, and periodically transmits a command to increase or decrease the power to each MS at a predetermined interval, thereby performing the uplink power control. According to this method, it is impossible to perform the closed loop power control for the first uplink data. Therefore, the MS performs an open loop power control for the first uplink data.

However, in performing the power control as described above, when the transmission power of the MS is smaller than the reference value, the transmitted data has an error and thus must be retransmitted, causing waste of resources. Further, when the transmission power of the MS is larger than the reference value, interference to adjacent cells and adjacent MSs may increase due to unnecessary power loss and the excessively large power. Therefore, when the MS sets the transmission power, the MS considers the $CINR_{inst}$ for the transmission power used for the open loop power control. The transmission power $P_{Tx}$ used for the open loop power control by the MS is defined by Equation (7) below.

$$P_{Tx} = PL_{DL} + NI + CINR_{t\,\arg\,et,MCS} + CINR_{offset} \qquad \ldots\ldots\ldots\ldots \quad (7)$$

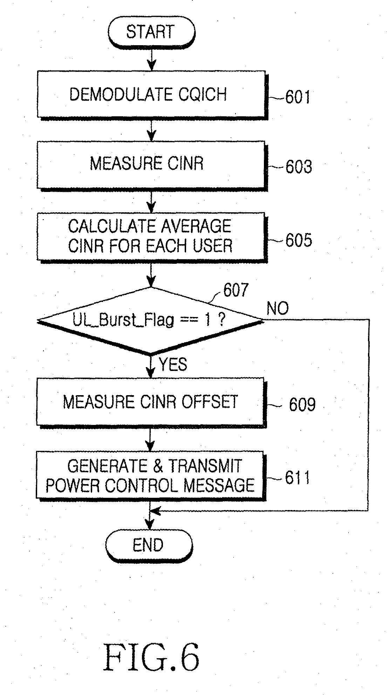

In Equation (7), $PL_{DL}$ denotes path loss of the downlink, $NI$ denotes the noise-interference level of the signal broadcasted by the BS, and $CINR_{t\,\arg\,et,\,MCS}$ denotes a reference CINR according to the MCS level. Further, the MS can use an optimized transmission power by setting the uplink transmission power of the MS using the $CINR_{offset}$. In a communication system using a packet transmission scheme, since the data transmission is not continuous, it is possible to achieve performance improvement in the uplink power control by applying the $CINR_{offset}$. Therefore, the closed loop power control can achieve a great performance improvement, and the open loop power control also can achieve such improvement. For this reason, the MS calculates the transmission power using the $CINR_{offset}$. Next, the operation of measuring the $CINR_{offset}$ by the BS will be described with reference to FIG. 6.

FIG. 6 is a flowchart of a method for power control in a wireless communication system according to the present invention. Referring to FIG. 6, in step 601, the BS obtains the first CINR by demodulating the CQICH. The CQICH is a channel for reporting the CQI of the downlink, and the first CINR is a CINR of the downlink measured by the MS.

Then, in step 603, the BS measures the second CINR using the received signal. Specifically, the BS estimates the noise power and signal power of the received signal, and calculates the second CINR using the estimated noise power and signal power. Therefore, since the BS measures the CINR by use of the received signal, the second CINR can take the CQI of the uplink into consideration. Further, the second CINR corresponds to $CINR_{inst}$ in Equation (6), above.

Then, in step 605, the BS calculates an average CINR using the first CINR and the second CINR. At this time, the BS calculates an average CINR for each MS. Then, in step 607, the BS determines if the BS has received a message having a $UL\_BURST_{CID\_}Flag$ set as "1" from the MS. As a result of the determination, when the $UL\_BURST_{CID\_}Flag$ is not set as "1", the BS terminates the process.

However, when the $UL\_BURST_{CID\_}Flag$ is set as "1", the BS proceeds to step 609. When the $UL\_BURST_{CID\_}Flag$ is set as "1", it implies that there is data to be transmitted from a corresponding MS to the BS. Therefore, the BS must command the MS to perform power control.

Step 607 corresponds to a step in which the corresponding MS reports the necessity for execution of the power control to the BS, although such reporting can be performed in another step instead of step 607.

Then, in step 609, the BS measures a CINR offset. The CINR offset corresponds to a difference between the reference CINR and the average CINR, and the reference CINR indicates a required CINR for reception of signals from MSs by the BS.

Then, in step 611, the BS generates a power control message including the generated CINR offset and transmits the generated power control message to the corresponding MS.

The MS receives the power control message from the BS, and sets the transmission power by reflecting the CINR offset included in the power control message in setting the transmission power.

The BS measures the CQI of each MS, the second CINR, through the CQICH for reporting the CQI of the downlink. Further, the BS calculates a difference between the reference CINR and the average CINR, that is, the CINR offset, and performs power control using the CINR offset in consideration of both the uplink and the downlink of the BS. Further, although the CINR is used as an example of the CQI in the above description of the present invention, it is possible to use other factors such as an SNR according to the system condition or user's setup.

As described above, the present invention is directed to a method for uplink power control in a wireless communication system, in which an average CQI is calculated using the CQI of the uplink and the downlink, a difference between the calculated information and a reference CINR required by the BS is transmitted to the MS, so that the MS can perform the power control. Therefore, in the wireless communication system according to the present invention, it is possible to perform more exact uplink power control by taking the channel quality of both the uplink and the downlink into account. Especially when this power offset value is reflected in the initial transmission power, that is, in the transmission power for the first data transmission according to a closed loop power control scheme, the power control can have a large effect. Further, when the data transmission is not continuous as in the data transmission using a packet transmission scheme, the power control can optimize transmission power, thereby improving the system performance.

While the invention has been shown and described with reference to certain preferred embodiments thereof, it will be understood by those skilled in the art that various changes in form and details may be made therein without departing from the spirit and scope of the invention, as defined by the appended claims.

**Claims**

1. A method for power control by a mobile station in a wireless communication system, the method comprising the steps of:

measuring first channel quality information from a signal received from a base station and transmitting the first channel quality information to the base station;

receiving a power control message including a difference between an average channel quality value and a reference channel quality value from the base station, wherein the average channel quality value is obtained by averaging the first channel quality information and second channel quality information measured from a signal received by the base station, and the reference channel quality value is a reference required by the base station; and

detecting the difference between the average channel quality value and the reference channel quality value and setting a transmission power for data communication based on the difference.

2. The method as claimed in claim 1, wherein each of the first channel quality information, the second channel quality information, the reference channel quality value, and the average channel quality value includes a Carrier to Interference and Noise Ratio (CINR).

3. The method as claimed in claim 1, wherein the first channel quality information is channel quality information of a downlink, and the second channel quality information is channel quality information of an uplink.

4. The method as claimed in claim 1, further comprising transmitting the first channel quality information to the base station through a channel quality information indicator channel.

5. The method as claimed in claim 1, wherein the transmission power is set using at least one of a downlink path loss, a noise-interference level of a signal broadcasted by the base station, and a reference channel quality value based on an Adaptive Modulation and Coding (AMC) level.

6. The method as claimed in claim 1, wherein the average channel quality value is calculated by applying weights to the first channel quality information and the second channel quality information.

7. A method for power control by a base station in a wireless communication system, the method comprising the steps of:

receiving first channel quality information measured by a mobile station;
measuring second channel quality information from a signal received from the mobile station;
calculating an average channel quality value of the first channel quality information and second channel quality information; and
measuring a difference between the average channel quality value and a reference channel quality value of a received signal, generating a power control message including the difference, and transmitting the power control message to the mobile station.

8. The method as claimed in claim 7, wherein each of the first channel quality information, the second channel quality information, the reference channel quality value, and the average channel quality value includes a Carrier to Interference and Noise Ratio (CINR).

9. The method as claimed in claim 7, wherein the first channel quality information is channel quality information of a downlink, and the second channel quality information is channel quality information of an uplink.

10. The method as claimed in claim 7, further comprising receiving the first channel quality information from the mobile station through a channel quality information indicator channel.

11. The method as claimed in claim 7, wherein the average channel quality value is calculated by applying weights to the first channel quality information and the second channel quality information.

12. An apparatus for power control in a wireless communication system, the apparatus comprising:

a mobile station for measuring first channel quality information from a signal received from a base station and transmitting the first channel quality information to the base station, receiving a power control message including a difference between an average channel quality value and a reference channel quality value from the base station, wherein the average channel quality value is obtained by averaging the first channel quality information and second channel quality information measured from a signal received by the base station, and the reference channel quality value is a reference required by the base station, and detecting the difference between the average channel quality value and the reference channel quality value and setting a transmission power for data communication based on the difference.

**13.** The apparatus as claimed in claim 12, wherein each of the first channel quality information, the second channel quality information, the reference channel quality value, and the average channel quality value includes a Carrier to Interference and Noise Ratio (CINR).

**14.** The apparatus as claimed in claim 12, wherein the first channel quality information is channel quality information of a downlink, and the second channel quality information is channel quality information of an uplink.

**15.** The apparatus as claimed in claim 12, wherein the mobile station transmits the first channel quality information to the base station through a channel quality information indicator channel.

**16.** The apparatus as claimed in claim 12, wherein the transmission power is set based on at least one of path loss of the downlink, a noise-interference level of a signal broadcasted by the base station, and a reference channel quality value based on an Adaptive Modulation and Coding (AMC) level.

**17.** The apparatus as claimed in claim 12, wherein the average channel quality value is calculated by applying weights to the first channel quality information and the second channel quality information.

**18.** An apparatus for power control in a wireless communication system, the apparatus comprising:

a base station for receiving first channel quality information measured by a mobile station, measuring second channel quality information from a signal received from the mobile station, calculating an average channel quality value of the first channel quality information and second channel quality information, and measuring a difference between the average channel quality value and a reference channel quality value of a received signal, generating a power control message including the difference, and transmitting the power control message to the mobile station.

**19.** The apparatus as claimed in claim 18, wherein the base station comprises:

a demodulator for receiving a signal from the mobile station and obtaining the first channel quality information;
a second channel quality information measurer for obtaining the second channel quality information from the received signal;
a channel quality information averager for calculating the average channel quality value by averaging the first channel quality information and the second channel quality information;
a channel quality information measurer for measuring a difference between the average channel quality value and the reference channel quality value of the received signal of the base station; and
a power control message generator for generating a transmission power control message including the difference to a corresponding mobile station and transmitting the transmission power control message to the corresponding mobile station.

**20.** The apparatus as claimed in claim 18, wherein each of the first channel quality information, the second channel quality information, the reference channel quality value, and the average channel quality value includes a Carrier to Interference and Noise Ratio (CINR).

**21.** The apparatus as claimed in claim 18, wherein the first channel quality information is channel quality information of a downlink, and the second channel quality information is channel quality information of an uplink.

**22.** The apparatus as claimed in claim 18, wherein the base station receives the first channel quality information from the mobile station through a channel quality information indicator channel.

**23.** The apparatus as claimed in claim 18, wherein the average channel quality value is calculated by applying weights to the first channel quality information and the second channel quality information.

FIG.1

TIME

| TILE 1 | TILE 2 | TILE 3 | TILE 4 | TILE 5 | TILE 6 |

FREQUENCY

FIG.2

300

| P | 7 | 8 | P |
| 3 | 4 | 5 | 6 |
| P | 1 | 2 | P |

TIME

FREQUENCY

☐ DATA SUB-CARRIER

▨ P PILOT SUB-CARRIER

# FIG.3A

350

| 6 | 7 | 8 |
| 4 | P | 5 |
| 1 | 2 | 3 |

TIME

FREQUENCY

☐ DATA SUB-CARRIER

▨ P PILOT SUB-CARRIER

# FIG.3B

FIG.4

EP 1 811 685 A2

FIG.5

START

DEMODULATE CQICH — 601

MEASURE CINR — 603

CALCULATE AVERAGE
CINR FOR EACH USER — 605

607

UL_Burst_Flag == 1 ? — NO

YES

MEASURE CINR OFFSET — 609

GENERATE & TRANSMIT
POWER CONTROL MESSAGE — 611

END

FIG.6